# EUROPÄISCHE PATENTSCHRIFT

(11) **EP 4 396 543 B1**
(45) Veröffentlichungstag und Bekanntmachung des Hinweises auf die Patenterteilung: **09.04.2025**
(21) Anmeldenummer: 22768295.2
(22) Anmeldetag: 18.08.2022
(51) Int. Cl.: G01F 15/12

(54) **REINIGUNGSVORRICHTUNG**
CLEANING DEVICE
DISPOSITIF DE NETTOYAGE

(30) Priorität: 01.09.2021 DE 102021122630
(43) Veröffentlichungstag der Anmeldung: 10.07.2024
(73) Patentinhaber: Binder GmbH, 89081 Ulm (DE)
(72) Erfinder: BINDER, Robert, 89150 Laichingen (DE)
(74) Vertreter: Witte, Weller & Partner Patentanwälte mbB
(86) Internationale Anmeldenummer: PCT/EP2022/073037
(87) Internationale Veröffentlichungsnummer: WO 2023/030901

(56) Entgegenhaltungen:
- EP-A1- 0 008 041
- CN-U- 212 340 334
- DE-C1- 19 839 954
- DE-U1- 20 005 834
- JP-A- 2011 086 185
- JP-A- S 516 754
- JP-U- H0 550 322
- JP-U- S50 116 450
- US-A- 5 419 190

## Beschreibung

Die vorliegende Erfindung betrifft eine Reinigungsvorrichtung zum Einbau in eine Rohrleitung. Darüber hinaus betrifft die Erfindung auch ein Verfahren zum in-situ Reinigen von zumindest einer Sensorspitze einer Sensoreinheit in einer Rohrleitung mit einer erfindungsgemäßen Reinigungsvorrichtung.

Vorrichtungen zum Reinigen von Sensoren sind beispielsweise aus US 5 419 190 A, JP H05 50322 U2, JP 2011 086185 A oder DE 198 39 954 C1 bekannt.

In unterschiedlichen Technikbereichen werden Sensoren eingesetzt, um beispielsweise die Durchflussmenge eines bestimmten Mediums, das in einer Rohrleitung strömt, zu messen. Hierbei tritt häufiger das Problem auf, dass die dem Medium ausgesetzte Sensorspitze des Sensors verschmutzt und infolge dessen falsche Messwerte liefert. Um solche falschen Messwerte zu vermeiden, muss die Sensorspitze in bestimmten Zeitabständen gereinigt werden. Hierfür ist es bisher notwendig, die gesamte Sensoreinheit auszubauen und außerhalb der Rohrleitung zu säubern. Dieser Vorgang ist sehr aufwendig.

Vor diesem Hintergrund besteht die Aufgabe der vorliegenden Erfindung darin, eine Möglichkeit zu schaffen, die Sensorspitze einer Sensoreinheit einfach und kostengünstig zu reinigen.

Diese Aufgabe wird gelöst durch eine Reinigungsvorrichtung, wie sie in Anspruch 1 definiert ist. Die Reinigungsvorrichtung weist eine Sensoreinheit mit zumindest einer Sensorspitze auf. Ferner ist ein längliches Gehäuse vorgesehen, das ein erstes Längsende und ein zweites Längsende aufweist und die Sensoreinheit zumindest teilweise aufnimmt, sodass die Sensorspitze -im Messmodus- am zweiten Längsende hervorragt. Schließlich ist eine Abstreifeinheit vorgesehen, die in Längsrichtung bewegbar im Gehäuse gehalten ist und ein Abstreifelement aufweist, das der Sensorspitze zugeordnet ist, dergestalt, dass bei einer Bewegung der Abstreifeinheit das Abstreifelement an der Sensorspitze entlang streift und diese dadurch reinigt.

Diese Lösung ermöglicht, dass die Sensorspitze im eingebauten Zustand innerhalb der Rohrleitung gereinigt werden kann. Das Abstreifelement wird hierfür an der Sensorspitze auf und ab bewegt, um auf diese Weise den Schmutz mechanisch abzutragen. Das Abstreifelement schabt sozusagen die Verunreinigungen von der Sensorspitze ab. Ein Ausbau der Sensoreinheit aus der Rohrleitung ist damit hinfällig. Der Reinigungsvorgang kann von außen manuell oder automatisiert gestartet werden, ohne dass ein Eingriff in die Rohrleitung erforderlich wäre. Die Wartungsarbeiten werden dadurch erheblich vereinfacht und die Stillstandzeiten der gesamten Anlage, in der die Rohrleitung verbaut ist, reduziert.

Die Abstreifeinheit weist einen Zylinderraum auf, in welchem ein Kolbenelement vorgesehen ist, das den Zylinderraum in eine erste und eine zweite Kammer trennt.

Das Kolbenelement ist mit der Sensoreinheit verbunden. Wird bei dieser Ausführungsform ein Medium, bspw. Hydraulikflüssigkeit, in die erste Kammer eingebracht, erfolgt eine Bewegung der Abstreifeinheit relativ zu dem Kolbenelement, an dem die Sensoreinheit angebracht ist. Die Abstreifeinheit bewegt sich aus dem Gehäuse etwas heraus, sodass das Abstreifelement über die Sensorspitze gleitet und die Reinigung vornimmt.

Die Aufgabe der Erfindung wird damit vollkommen gelöst.

Bei einer bevorzugten Weiterbildung ist eine Antriebseinheit vorgesehen, die mit der Abstreifeinheit verbindbar ist, um die Abstreifeinheit in Längsrichtung zu bewegen. D. h. mit anderen Worten, dass die Antriebseinheit die Abstreifeinheit mit einer Kraft beaufschlagen kann, die dann zu einer Bewegung im Gehäuse führt, wobei das Gehäuse die Abstreifeinheit führt. Zur Aufbringung dieser Kraft sind viele Möglichkeiten denkbar, wobei sich jedoch ein hydraulisches System als besonders bevorzugt herausgestellt hat. Durch Einbringen einer Hydraulikflüssigkeit unter Druck lässt sich die zur Bewegung erforderliche Kraft aufbringen, um die Abstreifeinheit relativ zu der Sensorspitze zu verlagern.

Bevorzugt ist in der zweiten Kammer eine Feder vorgesehen, die die Abstreifeinheit wieder in eine Ausgangsposition zurückführt. In dieser Ausgangsposition wird die Sensorspitze nicht mehr von der Abstreifeinheit abgedeckt, sodass die Sensoreinheit ihre volle Funktionalität besitzt. In dieser Position der Abstreifeinheit ist folglich eine ungestörte Messung durch die Sensoreinheit innerhalb der Rohrleitung möglich.

Weiter bevorzugt ist innerhalb des Gehäuses eine Hydraulikleitung vorgesehen, die an ihrem einen Ende mit der hydraulischen Antriebseinheit verbindbar ist und an ihrem anderen Ende mit einem Hydraulikkanal innerhalb der Abstreifeinheit verbunden ist, wobei der Hydraulikkanal in die ersten Kammer des Zylinderraums mündet. Bevorzugt ist die Hydraulikleitung zumindest abschnittsweise als flexible Leitung, beispielsweise als Schlauchleitung ausgebildet, sodass die Leitung der Bewegung der Abstreifeinheit folgen kann.

Bei einer bevorzugten Weiterbildung sind zumindest eine, vorzugsweise zwei Reinigungsdüsen vorgesehen, die in Richtung der Sensorspitze ausgerichtet sind. Zur Versorgung dieser Reinigungsdüsen ist bevorzugt eine Leitung für eine Reinigungsflüssigkeit innerhalb des Gehäuses vorgesehen, die an ihrem ersten Längsende mit einer Versorgungsleitung verbindbar ist und deren zweites Längsende mit einem Kanal verbunden ist, der sich innerhalb der Abstreifeinheit bis zu der zumindest einen Reinigungsdüse erstreckt.

Der Vorteil dieser Reinigungsdüsen ist darin zu sehen, dass die Sensorspitze beispielsweise vor der mechanischen Reinigung mit einer Reinigungsflüssigkeit besprüht werden kann, um die Verschmutzung zumindest teilweise zu lösen. Die anschließende mechanische Reinigung kann dann ein deutlich besseres Ergebnis erreichen.

Bevorzugt sind die eine oder die mehreren Reinigungsdüsen in einem U-förmigen Trägerelement vorgesehen, vorzugsweise in der Basis dieses Trägerelements, wobei die Basis beabstandet zu dem Abstreifelement liegt und dazwischen einen Raum definiert in dem die Sensorspitze -im Messmodus- liegt.

Der Vorteil dieses Trägerelements kann darin gesehen werden, dass die Reinigungsdüsen besser auf die Sensorspitze ausgerichtet werden können. Da die beiden Schenkel des U-förmigen Trägerelements sich in Strömungsrichtung erstrecken, stellen Sie kein Hindernis für die Messung dar, sodass die Sensorspitze von dem Medium in der Rohrleitung gut umströmt wird.

Bei einer bevorzugten Weiterbildung ist das Abstreifelement an der Abstreifeinheit auswechselbar angebracht. Somit kann das Abstreifelement nach entsprechender Abnutzung leicht ausgewechselt werden. Weiter bevorzugt weist das Abstreifelement zumindest eine Abstreiffeder auf. Diese Abstreiffeder dient dazu, feine Ablagerungen bzw. Verschmutzungen an der Sensorspitze final und sauber zu entfernen. Bevorzugt ist das Abstreifelement aus einem metallischen und nicht rostenden Material gefertigt, wobei das Material sich in der Paarung mit dem Material der Sensorspitze, bspw. Edelstahl und Hastelloy, eignen (bspw. nicht fressen) sollte. Besonders bevorzugt wird das Material aus folgenden Materialien ausgewählt: Hastelloy^{®}, Titan, C63000, Duplexstahl. Alternativ können auch keramische Werkstoffe oder Sinterwerkstoffe verwendet werden.

Bei einer bevorzugten Weiterbildung weist das Abstreifelement eine Öffnung für die Sensorspitze auf, deren Umfangsrand messerartig ausgebildet ist, sodass bei einer Relativbewegung von Sensorspitze und Abstreifelement eine mechanische Reinigung der Oberfläche der Sensorspitze erfolgt. Diese Ausgestaltung hat den Vorteil, dass der gesamte Umfang der Sensorspitze sicher gereinigt werden kann, wobei auch hartnäckige Verschmutzungen durch die messerartige Ausgestaltung abgeschabt werden können. Selbstverständlich wäre es auch denkbar, das Abstreifelement kleiner auszubilden, und stattdessen dieses drehbar um die Längsachse der Sensorspitze zu halten. Für die Reinigung des gesamten Umfangs der Sensorspitze müsste dann das Abstreifelement bei jeder Abwärtsbewegung etwas gedreht werden.

Bei einer bevorzugten Weiterbildung ist die Antriebseinheit als mobile Antriebseinheit vorgesehen. D. h. mit anderen Worten, dass die Antriebseinheit nicht fester Bestandteil der Reinigungsvorrichtung ist, sondern nur bei Bedarf für eine Reinigung an der Reinigungsvorrichtung angeschlossen wird. Die Antriebseinheit weist hierfür eine Pumpe auf, die aus einem Behälter für Hydraulikflüssigkeit diese gesteuert in die Hydraulikleitung der Reinigungsvorrichtung pumpen kann, um so entsprechend Druck in der ersten Kammer aufzubauen und die Abstreifeinheit zu bewegen. Bevorzugt weist die mobile Antriebseinheit zusätzlich einen Behälter für Reinigungsflüssigkeit und eine Pumpe zum Einbringen der Reinigungsflüssigkeit in die entsprechende Leitung der Reinigungsvorrichtung auf. Weiter bevorzugt weist die mobile Antriebseinheit eine Steuerung auf, die es ermöglicht, ein vorgegebenes Reinigungsprogramm, das mehrere Reinigungsschritte umfassen kann, automatisch auszuführen.

Alternativ hierzu kann die Antriebseinheit mit den vorgenannten Elementen auch fest mit der Reinigungsvorrichtung verbunden sein, sodass jederzeit eine Reinigung der Sensorspitze ausgeführt werden kann.

Die der Erfindung zugrunde liegende Aufgabe wird gemäß Anspruch 16 auch von einem Verfahren zum in-situ Reinigen von zumindest einer Sensorspitze einer Sensoreinheit in einer Rohrleitung mit einer erfindungsgemäßen Reinigungsvorrichtung gelöst, wobei das Abstreifelement über die Antriebseinheit ein- oder mehrmals in Längsrichtung hin- und her bewegt wird, sodass das Abstreifelement an der Sensorspitze entlang gleitet und diese reinigt, , wobei für die Bewegung das Volumen der zweiten Kammer (106) vergrößert wird. Bevorzugt wird die Sensorspitze vor oder nach der vorgenannten mechanischen Reinigung mit einer Reinigungsflüssigkeit eingesprüht. Bevorzugt wird dieser Vorgang von Einsprühen der Sensorspitze mit einer Reinigungsflüssigkeit und mechanischem Reinigen mehrmals nacheinander ausgeführt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung. Dabei zeigen:
Figur 1 eine perspektivische Darstellung eines Abschnitts einer Rohrleitung, in die eine erfindungsgemäßen Reinigungsvorrichtung eingebaut ist;
Figur 2 eine Seitenansicht der Reinigungsvorrichtung;
Figur 3 eine Schnittansicht entlang der Linie A-A aus Figur 2;
Figur 4 eine Schnittdarstellung des Bereichs B aus Figur 3;
Figur 5 eine Schnittdarstellung des Bereichs B aus Figur 3 um 90° gedreht;
Figuren 6A, 6B jeweils schematische Darstellungen zur Erläuterung der Bewegung der Abstreifeinheit innerhalb des Gehäuses; und
Figur 7 eine schematische Darstellung einer mobilen Einheit, die an die Reinigungsvorrichtung anschließbar ist.

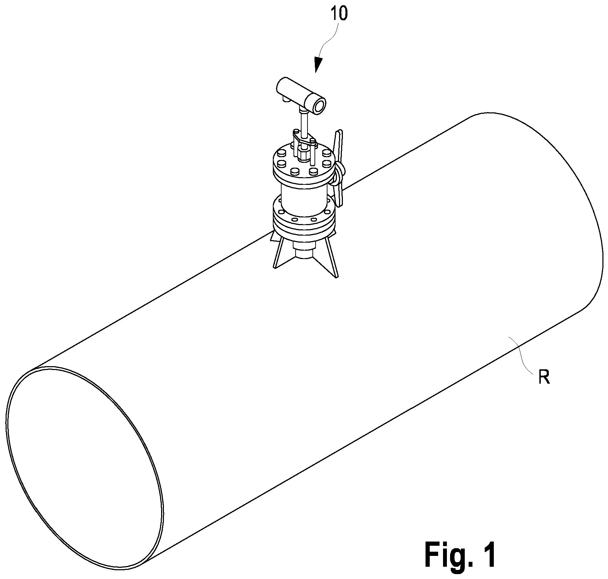

Figur 1 zeigt in einer perspektivischen Ansicht einen Abschnitt einer Rohrleitung R, die Teil einer größeren Anlage ist. Die Rohrleitung wird beispielsweise von einem gasförmigen Medium, bspw. Luft, durchströmt, falls es sich bei der Anlage bspw. um eine Kläranlage handelt. Für die Steuerung des Luftstroms in der Rohrleitung ist es erforderlich, bestimmte Parameter, wie bspw. die Durchflussmenge, zu messen. Hierfür werden Sensoren, bspw. Durchflussmess-Sensoren eingesetzt, die in den Innenraum der Rohrleitung hineinragen. In Figur 1 ist ein solcher Sensor in einer Reinigungsvorrichtung 10 enthalten, die mit einem Teil in die Rohrleitung R hineinragt und deren anderer Teil außerhalb der Rohrleitung und in der Figuren sichtbar ist. Diese Reinigungsvorrichtung 10, die nachfolgend im Detail erläutert werden wird, ist mit der Rohrleitung R über einen Flansch lösbar verbunden.

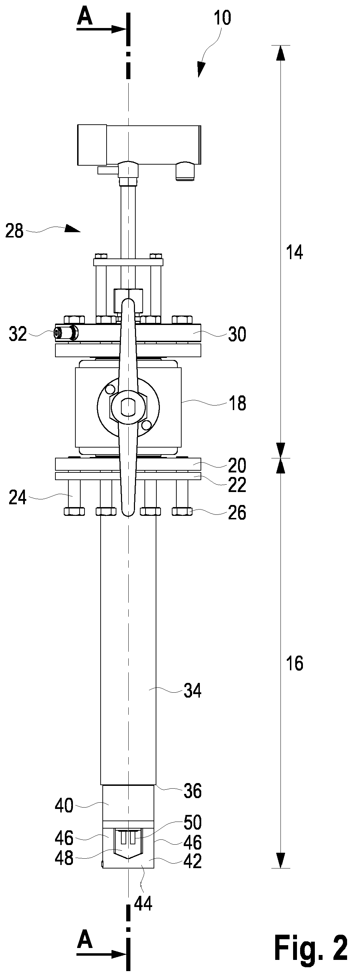

In Figur 2 ist nun die Reinigungsvorrichtung 10 in einer Seitenansicht dargestellt. Wie zuvor bereits erläutert, gliedert sich die Reinigungsvorrichtung 10 in zwei Abschnitte 14,16, wobei der obere Abschnitt 14 sich im verbauten Zustand außerhalb der Rohrleitung und der untere Abschnitt 16 sich innerhalb der Rohrleitung befindet.

Der obere Abschnitt 14 weist einen Kugelhahn 18 auf, der über einen Flansch 20 mit einem Flansch 22 des unteren Abschnitts 16 verbunden werden kann. Für die Verbindung sind mehrere Gewindebolzen 24 und Sechskantmuttern 26 vorgesehen. Der Kugelhahn 18 ermöglicht den Ausbau der gesamten Vorrichtung aus der Rohrleitung bspw. zu Reparaturzwecken, wobei die entstehende Öffnung dann mit dem Kugelhahn verschlossen werden kann. Ferner weist der obere Abschnitt 14 einen Bereich 28 auf, der einerseits der Medienzuführung und andererseits als Ausgang für die Messsignal-Leitungen dient. Dieser Bereich 28 ist ebenfalls über einen Flansch 30 mit dem Kugelhahn 18 verbunden. Der Flansch 30 besitzt seinerseits zumindest zwei Anschlusskupplungen 32 für Medien, wobei in Figur 2 eine Anschlusskupplung 32 zu sehen ist.

Ausgehend vom Flansch 22 des unteren Abschnitts 16 erstreckt sich ein rohrförmiges Gehäuse 34, das an einem unteren Längsende 36 endet. Das Gehäuse 34 ist an dem unteren Längsende 36 offen ausgebildet und nimmt zumindest teilweise eine Abstreifeinheit 40 auf. Die Abstreifeinheit 40 hat, wie in Figur 2 gezeigt, ein rohrförmiges Gehäuse, dessen Form an die Innenkontur des Gehäuses 34 angepasst ist. Die Anpassung erfolgt insbesondere so, dass die Abstreifeinheit 40 im Gehäuse 34 in Längsrichtung bewegbar bzw. verlagerbaren ist. Beispielsweise entspricht der Außendurchmesser des Gehäuses der Abstreifeinheit 40 dem Innendurchmesser des Gehäuses 34.

Am unteren Ende der Abstreifeinheit 40 ist ein U-förmiges Trägerelement 42 angebracht, dessen Basis 44 beabstandet zu dem unteren Ende der Abstreifeinheit 40 liegt. Seitlich begrenzt durch die beiden Schenkel 46 des Trägerelements ergibt sich somit ein durchströmbarer Kanal 48, innerhalb dem beispielsweise die Durchflussmessung über Sensorelemente erfolgen kann. In Figur 2 ist beispielsweise die Spitze 50 eines Sensorelements zu erkennen, die in diesen Kanal 48 hineinragt.

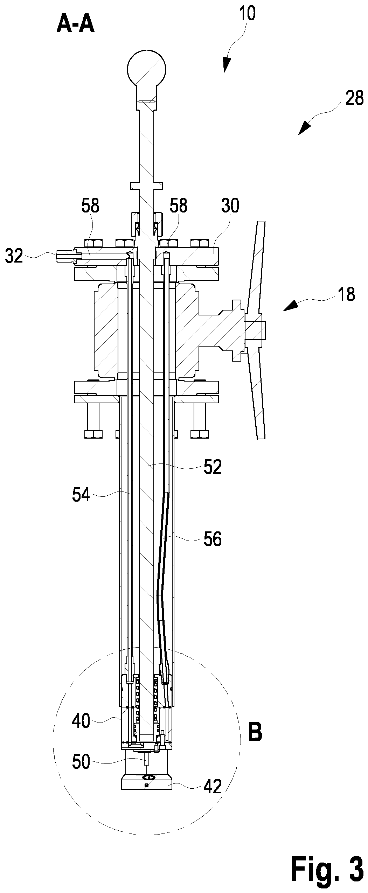

In der Schnittansicht von Figur 3 lässt sich erkennen, welche Elemente insbesondere innerhalb des Gehäuses 34 des unteren Abschnitts 16 vorgesehen sind. So erstreckt sich innerhalb des Gehäuses 34 eine Sensoreinheit 52 an deren unterem Ende sich die Sensorspitze 50 befindet. Im vorliegenden Ausführungsbeispiel sind zwei Sensorspitzen 50 vorgesehen. Wie sich aus Figur 3 weiter ergibt, erstreckt sich die Sensoreinheit 52 durch den Kugelhahn 18 sowie durch den Flansch 30 des oberen Bereichs 28.

Das Gehäuse nimmt ferner zwei Leitungen 54, 56 auf, die sich von dem Flansch 30 durch den Kugelhahn 18 bis zur Abstreifeinheit 40 erstrecken. Die beiden Leitungen 54, 56 sind zumindest abschnittsweise flexibel ausgebildet, beispielsweise als Schlauch, sodass eine Bewegung der Abstreifeinheit 40 innerhalb des Gehäuses 34 durch diese Leitungen nicht behindert wird.

Die Leitung 54 wird in der vorliegenden Ausführungsform für die Zuführung eines Hydrauliköls eingesetzt, während die andere Leitung 56 eine Reinigungsflüssigkeit, beispielsweise Wasser, Terpentin, Waschbenzin, Verdünnung etc., führt. Die beiden Leitungen 54,56 münden jeweils in einen Kanal 58 im Flansch 30, wobei die beiden Kanäle 58 ihrerseits jeweils mit einer Anschlusskupplung 32 enden. Über diese Anschlusskupplung 32 können die oben genannten Medien von außen zugeführt werden, indem entsprechende Leitungen mit Kupplungen angeschlossen werden.

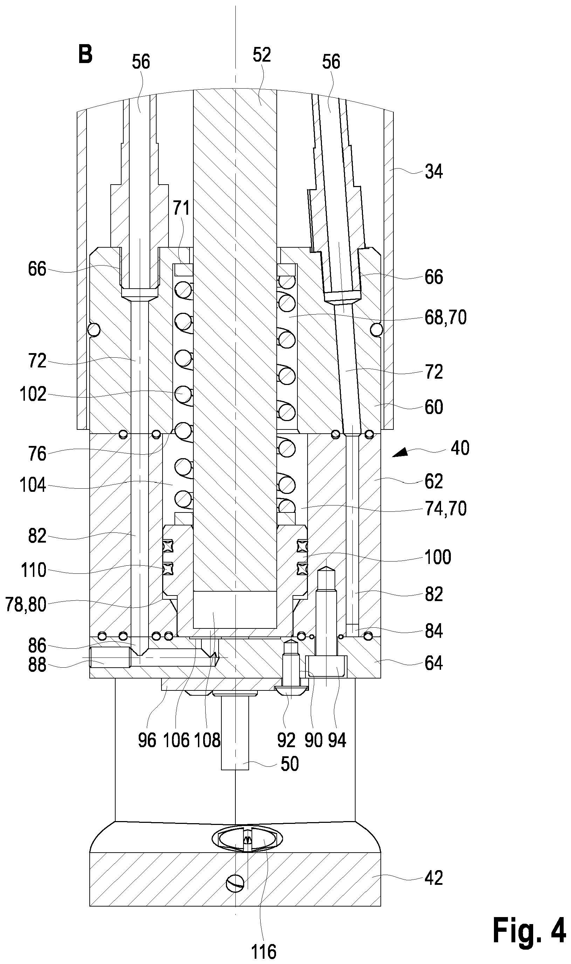

In Figur 4 ist insbesondere die Abstreifeinheit 40 in vergrößerter Darstellung gezeigt. Die Abstreifeinheit 40 ist zumindest abschnittsweise im Gehäuse 34 der Reinigungsvorrichtung 10 aufgenommen und geführt, derart, dass eine Bewegung bzw. Verlagerung im Gehäuse 34 in Längsrichtung möglich ist.

Die Abstreifeinheit 40 gliedert sich in drei Längsabschnitte 60, 62 und 64, die in dieser Reihenfolge miteinander beispielsweise durch Verschraubung verbunden sind. Alle drei Längsabschnitte 60, 62, 64 sind zylindrisch ausgebildet, wobei deren Außendurchmesser gleich ist und im wesentlichen dem Innendurchmesser des Gehäuses 34 entspricht. Der in Figur 4 obere Längsabschnitt 60 weist an seiner oberen Seite jeweils einen Anschluss 66 für die Leitung 54 bzw. die Leitung 56 auf. Vorzugsweise sind die beiden Leitungen 54,56 in die Anschlüsse 66 eingeschraubt. In Figur 4 ist auch zu erkennen, dass die beiden Anschlüsse 66 in entsprechende Kanäle 72 münden, die sich bis zum unteren Ende des entsprechenden Längsabschnitts 60 erstrecken.

Koaxial in dem oberen Längsabschnitt 60 ist eine Bohrung 68 vorgesehen, die Teil eines Zylinderraums 70 innerhalb der Abstreifeinheit 40 bildet. Die Bohrung 68 erstreckt sich durch die gesamte Länge des Längsabschnitts 60 und hat einen Innendurchmesser D1, der sich zum oberen Ende hin auf einen kleineren Innendurchmesser D2 reduziert. Dadurch ergibt sich eine Stufe 71 innerhalb der Bohrung 60.

Der mittlere Längsabschnitt 62 besitzt ebenfalls eine Bohrung 74, die Teil des Zylinderraums 70 ist. Der Innendurchmesser D3 der Bohrung 74 im oberen Bereich ist größer als der Innendurchmesser D1 der Bohrung 68, sodass sich eine Stufe 76 ausbildet. Der Innendurchmesser D3 ist konstant bis zu einem Punkt 78, an dem sich der Innendurchmesser auf einen kleineren Wert D4 reduziert, sodass sich hier ebenfalls eine Stufe 80 entsteht.

Wie der obere Längsabschnitt 60 weist auch der mittlere Längsabschnitt 62 zwei Kanäle 82 auf, die sich über die gesamte Länge des mittleren Längsabschnitts erstrecken und deren obere Enden mit den Kanälen 72 fluchten. Auf diese Weise können die über die Leitungen 54,56 zugeführten Medien bis zum unteren Ende des mittleren Längsabschnitts geführt werden.

An der Unterseite des mittleren Längsabschnitts 62 ist noch ein nach unten offener Kanal 84 vorgesehen, der sich entlang eines Kreissegments erstreckt, um das Medium zu mehreren Öffnungen in dem unteren Längsabschnitt 64 zu führen.

Der untere Längsabschnitt 64 weist einen Kanal 86 auf, der vom Kanal 82 versorgt wird. Der Kanal 86 erstreckt sich innerhalb des unteren Längsabschnitts 64 und mündet in den Zylinderraum 70 des mittleren Längsabschnitts 62. Zur Entlüftung dieses Kanals ist seitlich eine Schraube 88 vorgesehen.

Die Schnittansicht in Figur 4 lässt noch eine Schraube 94 erkennen, mit der der untere Längsabschnitt 64 mit dem mittleren Längsabschnitt 62 verschraubt wird. Es versteht sich, dass mehrere dieser Schrauben 94 vorgesehen sind. Ferner weist der untere Längsabschnitt 64 eine konzentrische Bohrung auf, durch die sich die Sensorspitze 50 nach unten erstreckt. Schließlich ist an der Unterseite des unteren Längsabschnitts 64 ein Abstreifelement 96 über eine oder mehrere Schrauben 92 angeschraubt.

Das Abstreifelement 96 weist eine Öffnung für die Sensorspitze 50 auf und ist so ausgelegt, dass der Rand dieser Öffnung die Sensorspitze kontaktiert. Dieser Rand, der messerartig ausgelegt werden kann, dient dazu, Verschmutzung an der Sensorspitze 50 abzutragen, wobei dieser Vorgang später noch im Detail erläutert werden wird.

Im Zylinderraum 70 des mittleren Längsabschnitts 62 ist ein Kolbenelement 100 vorgesehen, dass im wesentlichen eine zylindrische Form aufweist und einen ersten Abschnitt mit einem Außendurchmesser D3 und einen zweiten Abschnitt mit einem Außendurchmesser D4 besitzt. Der Bewegungsweg des Kolbenelements 100 relativ zu der Abstreifeinheit 40 wird begrenzt durch die beiden Stufen 76 und 80 innerhalb der Bohrung 74 des mittleren Längsabschnitts 62.

Innerhalb des Zylinderraums 70 ist eine Feder 102 vorgesehen, die sich einerseits an der Stufe 71 und andererseits an der Oberseite des Kolbenelements 100 abstützt. Die Feder beaufschlagt das Kolbenelement 100 mit einer in Figur 4 nach unten gerichteten Kraft. Insbesondere sorgt die Feder 102 dafür, dass das Kolbenelement 100 bzw. die Abstreifeinheit 40 in eine Ausgangsposition geführt wird, in der die Sensorspitze 50 frei Kanal 48 liegt und so Messungen durchführen kann.

Das Kolbenelement 100 trennt den Zylinderraum 70 in eine obere Kammer 104 und eine untere Kammer 106. In der in Figur 4 gezeigten Ausgangsposition ist das Volumen der unteren Kammer 106 minimal und dass der oberen Kammer 104 maximal.

Wird jedoch Hydrauliköl über die Leitung 54 und am Ende über den Kanal 86 in die untere Kammer 106 des Zylinderraums 70 eingebracht, bspw. mit einem Druck von 3 - 7 bar, vergrößert sich das Volumen, in dem die Abstreifeinheit 40 gegen die Kraft der Feder 102 relativ zu dem Gehäuse 34 nach unten bewegt wird. Wird der durch das Hydrauliköl erzeugte Druck in der unteren Kammer 106 reduziert, sorgt die Feder 102 für eine Rückführung der Abstreifeinheit 40 in die in Figur 4 gezeigte Ausgangsposition.

Das Kolbenelement 100 weist eine Bohrung 108 auf, die konzentrisch vorgesehen ist und das untere Ende der Sensoreinheit 52, insbesondere dessen rohrförmiges Gehäuse, aufnimmt. Das Kolbenelement 100 ist fest mit der Sensoreinheit 52 verbunden, sodass einer Relativbewegung zwischen den beiden Elementen nicht möglich ist. Zur Durchführung der Sensorspitze 50 weist das Kolbenelement 100 am unteren Ende entsprechende Bohrung auf, die in Figur 4 jedoch nicht gezeigt sind.

Wie zuvor bereits kurz dargestellt, ist eine Relativbewegung zwischen Kolbenelement 100 und Abstreifeinheit 40 möglich. Da Gehäuse 34, Sensoreinheit 52 und Kolbenelement 100 im eingebauten Zustand der Reinigungsvorrichtung eine ortsfeste Einheit (auch in bezug zur Rohrleitung R) bilden, bewegt sich folglich die Abstreifeinheit 40, wenn in die untere Kammer 106 Hydrauliköl unter Druck eingebracht wird.

Um die beiden Kammern 104 und 106 druckdicht voneinander zu trennen, verfügt das Kolbenelement 100 über mehrere, im gezeigten Ausführungsbeispiel zwei Ringdichtungen 110, die an der Innenwand der Bohrung 74 anliegen.

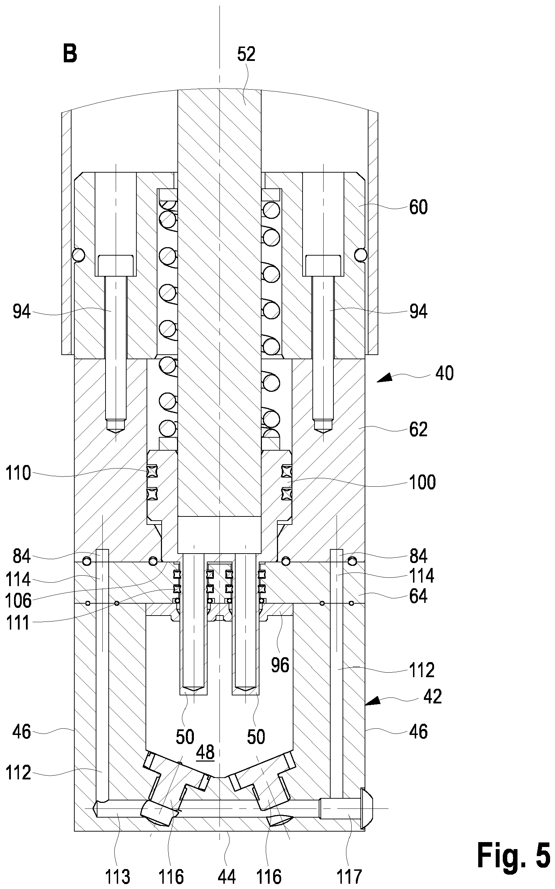

In Figur 5 ist die Abstreifeinheit 40 aus Figur 4 nochmals dargestellt, allerdings in einen um 90° gedrehten Schnitt (Drehung um die Längsachse). Zur Vereinfachung werden gleiche Bezugszeichen für die Bezeichnung gleicher Bauelemente benutzt, um auf eine erneute Erläuterung dieser Bauelemente verzichten zu können.

Figur 5 lässt gut erkennen, dass die Sensoreinheit 52 zwei Sensorspitzen 50 aufweist, die sich durch Öffnungen im Kolbenelement 100 und dem unteren Längsabschnitt 64 in den Kanal 48 erstrecken. Um die untere Kammer 106 zum Kanal 58 hin abzudichten, sind in den beiden Bohrungen für die Sensorspitzen 50 mehrere Ringdichtungen 111 vorgesehen.

An der Unterseite des unteren Längsabschnitts 64 der Abstreifeinheit 40 ist das Trägerelement 42 vorgesehen, in dessen beiden Schenkeln 46 Kanäle 112 vorgesehen sind, die einerseits in einen Kanal 113 in der Basis 44 münden und andererseits über entsprechende Kanäle 114 im unteren Längsabschnitt 64 in Fluid Verbindung mit dem Kanal 84 im mittleren Längsabschnitt 62 stehen.

In der Basis 44 des Trägerelements 42 sind vorzugsweise zwei Reinigungsdüsen 116 vorgesehen, die über einen oder zwei getrennte Kanäle 113 mit einer Reinigungsflüssigkeit versorgt werden können. Die Reinigungsdüsen 116 sind unterschiedlich ausgerichtet derart, dass sie Reinigungsflüssigkeit auf die Sensorspitze 50 sprühen können. Im vorliegenden Ausführungsbeispiel haben die Sprühachsen der beiden Reinigungsdüsen 116 einen Winkel zur Längsachse von jeweils nicht mehr als 45°.

Die Schnittansicht in Figur 5 lässt noch erkennen, dass der Kanal 113 über eine Schraube 117 entlüftet werden kann. Darüber hinaus ist erkennbar, dass der obere Längsabschnitt 60 über Schrauben 94 mit dem mittleren Längsabschnitt 62 der Abstreifeinheit 40 verbunden ist.

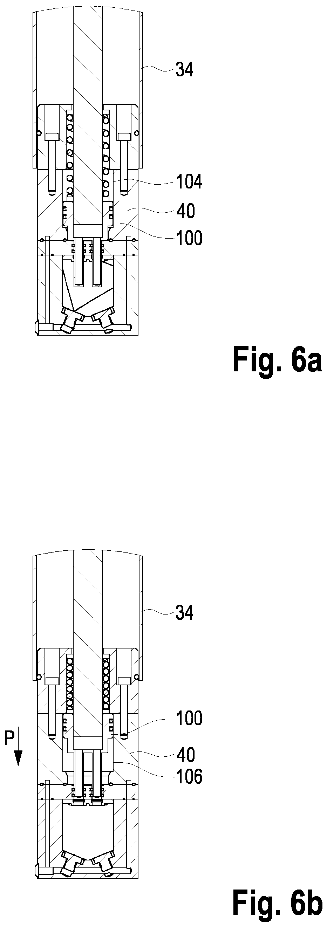

Wie zuvor bereits erläutert, kann durch Einbringen von Hydrauliköl in die untere Kammer 106 eine Bewegung der Abstreifeinheit 40 nach unten, also aus dem Gehäuse 34 heraus, verursacht werden. Diese Bewegung ist in den beiden Figuren 6A und 6B dargestellt. Die obere Figur 6A zeigt die Abstreifeinheit 40 in der Ausgangsposition bzw. Messposition, wie sie in den Figuren 4 und 5 bereits gezeigt ist. Wird nun Hydrauliköl in die untere Kammer 106 eingebracht, vergrößert sich das Volumen dieser unteren Kammer 106, wie dies in Figur 6B zu erkennen ist. Die Abstreifeinheit 40 bewegt sich entsprechend dem Pfeil P nach unten aus dem Gehäuse 34 heraus, jedoch nur so weit, dass zumindest ein Abschnitt der Abstreifeinheit 40 im Gehäuse 34 verbleibt und damit die Abstreifeinheit 40 auch in dieser "ausgefahrenen" Position gehalten wird.

In Figur 6B ist gut zu erkennen, dass in der ausgefahrenen Position der Abstreifeinheit 40 die beiden Sensorspitzen 50 vollständig im Zylinderraum 70 und den beiden Bohrungen im unteren Längsabschnitt 64 aufgenommen sind. Oder mit anderen Worten ausgedrückt ist der gesamte im Kanal 48 liegende Bereich der Sensorspitzen 50 an dem Abstreifelement 96 entlang gefahren. Durch die besondere Ausgestaltung des Abstreifelement 96 erfolgt durch diese Bewegung eine mechanische Reinigung der Sensorspitzen 50. An den Sensorspitzen 50 vorhandene Verschmutzungen lassen sich damit durch Abschaben entfernen.

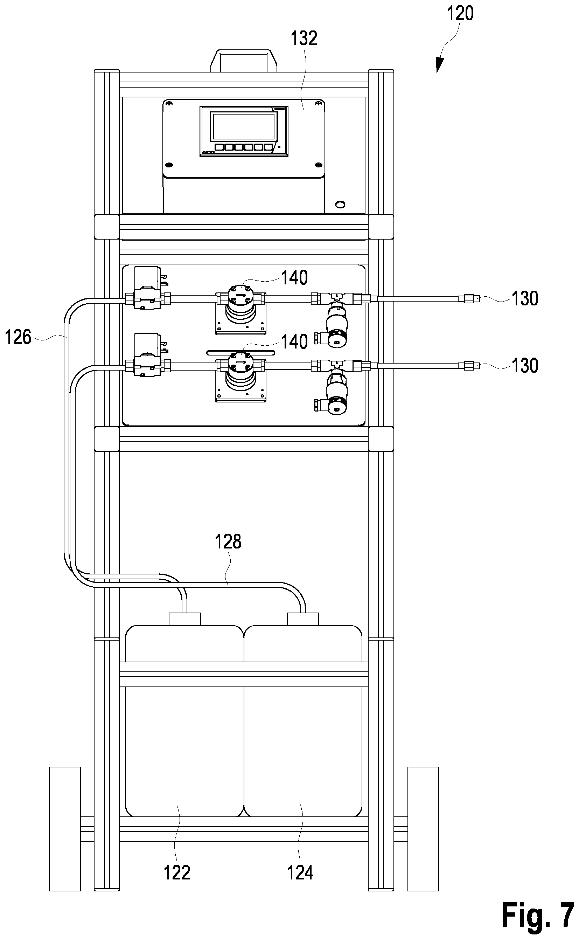

In Figur 7 ist eine mobile Einheit 120 dargestellt, die mehrere Komponenten zum Antrieb der Abstreifeinheit 40 (Antriebseinheit) und zum Sprühen von Reinigungsflüssigkeit über die Düsen 116 aufweist. Es sind zwei Behälter 122 und 124 vorgesehen, die das Hydrauliköl bzw. die Reinigungsflüssigkeit bevorraten. Aus den Behältern 122, 124 erstrecken sich Leitungen 126, 128, die über Anschlusskupplungen 130 mit den Anschlusskupplungen 32 der Reinigungsvorrichtung 10 verbindbar sind. In den beiden Leitungen 126,128 sind jeweils Pumpen 140 vorgesehen, die über eine Pumpensteuerung 132 gesteuert werden können. In der Pumpensteuerung 132 lassen sich unterschiedliche Reinigungsprozesse abspeichern, die manuell oder automatisch ausgewählt und gestartet werden können.

An dieser Stelle sei angemerkt, dass die mobile Einheit 120 auch als stationäre Einheit vorgesehen werden kann, die dann fest mit einer oder mehreren Reinigungsvorrichtung 10 verbunden ist.

Der Reinigungsvorgang der Sensorspitze 50 wird nun nachfolgend kurz erläutert.

Zunächst werden die Leitungen 126, 128 über die Kupplungen 130 an die Anschlusskupplungen 32 der Reinigungsvorrichtung 10 angeschlossen.

Anschließend wird die Pumpe für die Reinigungsflüssigkeit aktiviert, um Reinigungsflüssigkeit auf die Sensorspitzen 50 aufzusprühen. Durch die entsprechende Ausrichtung der beiden Reinigungsdüsen 116 wird im wesentlichen der gesamte Umfang mit Reinigungsflüssigkeit benetzt.

Nach einer gewissen Einwirkzeit, die über die Pumpensteuerung einstellbar ist, wird die Pumpe für Hydrauliköl aktiviert. Das Hydrauliköl wird beispielsweise mit einem Druck von bis zu 7 bar in die untere Kammer 106 der Abstreifeinheit 40 gepumpt. Dadurch bewegt sich die Abstreifeinheit 40 nach unten, sodass das Abstreifelement 96 am Umfang der Sensorspitze 50 entlang gleitet. Dadurch wird die durch die Reinigungsflüssigkeit aufgeweicht Verschmutzung mechanisch abgetragen. Nach einem Deaktivieren der Pumpe sorgt die Feder 102 für die Rückführung der Abstreifeinheit 40 in die Ausgangsposition, wobei auch bei dieser Bewegung die Sensorspitzen über das Abstreifelement 96 gereinigt werden.

Je nach Grad der Verschmutzung kann die Abstreifeinheit 40 mehrmals auf und ab bewegt werden, um den mechanischen Reinigungsvorgang mehrmals auszuführen. Auch dies kann in der Pumpensteuerung vorgegeben werden. Zudem kann selbstverständlich auch der Reinigungsvorgang mit der Reinigungsflüssigkeit mehrmals ausgeführt werden.

Es zeigt sich, dass mit der beschriebenen Reinigungsvorrichtung eine in-situ Reinigung der Sensorspitze möglich ist, ohne die Sensoreinheit ausbauen zu müssen. Damit lässt sich sehr viel Zeit einsparen und die Stillstandzeiten der Anlage können reduziert werden.

## Patentansprüche

1. Reinigungsvorrichtung zum Einbau in eine Rohrleitung, mit
einer Sensoreinheit (52), die zumindest eine Sensorspitze (50) aufweist;
einem länglichen Gehäuse (34), das ein erstes Längsende und ein zweites Längsende (36) aufweist und die Sensoreinheit (52) zumindest teilweise aufnimmt, so dass die Sensorspitze (50) - im Messmodus- am zweiten Längsende (36) hervorragt; und
einer Abstreifeinheit (40), die in Längsrichtung bewegbar im Gehäuse (34) gehalten ist und ein Abstreifelement (96) aufweist, das der Sensorspitze (50) zugeordnet ist, dergestalt, dass bei einer Bewegung der Abstreifeinheit (40) das Abstreifelement (96) an der Sensorspitze entlang streift und diese dadurch reinigt;
**dadurch gekennzeichnet, dass** die Abstreifeinheit (40) einen Zylinderraum (70) und ein darin vorgesehenes Kolbenelement (100) aufweist, wobei das Kolbenelement (100) mit der Sensoreinheit (52) verbunden ist und den Zylinderraum in eine erste und eine zweite Kammer (104, 106) trennt.

2. Reinigungsvorrichtung nach Anspruch 1, **gekennzeichnet durch** eine Antriebseinheit (120), die mit der Abstreifeinheit verbindbar ist, um die Abstreifeinheit in Längsrichtung zu bewegen.

3. Reinigungsvorrichtung nach Anspruch 1 oder 2, **dadurch gekennzeichnet, dass** die Antriebseinheit eine hydraulische Antriebseinheit ist, die vorgesehen ist, ein Hydraulikmedium in die erste Kammer (106) des Zylinderraums zu pumpen, um die Abstreifeinheit im Gehäuse in eine Längsrichtung zu bewegen.

4. Reinigungsvorrichtung nach Anspruch 1 oder 3, **dadurch gekennzeichnet, dass** die Abstreifeinheit (96) eine Feder (102) aufweist, die in der zweiten Kammer (104) des Zylinderraums vorgesehen ist und mit dem Kolbenelement zusammenwirkt.

5. Reinigungsvorrichtung nach einem der Ansprüche 1 bis 4, **dadurch gekennzeichnet, dass** innerhalb des Gehäuses (34) eine zumindest abschnittsweise flexible Hydraulikleitung (54) verläuft, die an ihrem einen Ende mit der hydraulischen Antriebseinheit verbindbar ist und an ihrem anderen Ende mit einem Hydraulikkanal innerhalb der Abstreifeinheit verbunden ist, wobei der Hydraulikkanal in die erste Kammer des Zylinderraums mündet.

6. Reinigungsvorrichtung nach einem der vorhergehenden Ansprüche, **dadurch gekennzeichnet, dass** zumindest eine Reinigungsdüse (116) vorgesehen, die in Richtung der Sensorspitze ausgerichtet ist.

7. Reinigungsvorrichtung nach Anspruch 6, **dadurch gekennzeichnet, dass** zwei nebeneinander angeordnete Reinigungsdüsen (116) vorgesehen sind, deren Ausrichtungen unterschiedlich sind.

8. Reinigungsvorrichtung nach Anspruch 6 bis 7, **dadurch gekennzeichnet, dass** an der Abstreifeinheit ein U-förmiges Trägerelement (42) vorgesehen ist, das an seiner Basis (44) die zumindest eine Reinigungsdüse aufnimmt, wobei die Basis des Trägerelements beabstandet zu dem Abstreifelement liegt und dazwischen einen Raum (48) definiert, in dem die Sensorspitze -im Messmodus- liegt.

9. Reinigungsvorrichtung nach einem der Ansprüche 6 bis 8, **dadurch gekennzeichnet, dass** innerhalb des Gehäuses (34) eine zumindest abschnittsweise flexible Leitung (56) für eine Reinigungsflüssigkeit verläuft, die an ihrem ersten Längsende mit einer Versorgungsleitung verbindbar ist und deren zweites Längsende mit einem Kanal verbunden ist, der sich innerhalb der Abstreifeinheit bis zu der zumindest einen Reinigungsdüse erstreckt.

10. Reinigungsvorrichtung nach einem der Ansprüche 1 bis 9, **dadurch gekennzeichnet, dass** das Abstreifelement (96) an der Abstreifeinheit auswechselbar angebracht ist.

11. Reinigungsvorrichtung nach einem der vorhergehenden Ansprüche, **dadurch gekennzeichnet, dass** das Abstreifelement aus einem metallischen, nicht rostenden oder einem keramischen Material besteht.

12. Reinigungsvorrichtung nach einem der vorhergehenden Ansprüche, **dadurch gekennzeichnet, dass** das Abstreifelement (96) zumindest eine Abstreiffeder aufweist.

13. Reinigungsvorrichtung nach einem der vorhergehenden Ansprüche, **dadurch gekennzeichnet, dass** die Sensoreinheit (52) einen Sensor zur Durchflussmessung von gasförmigen Medien aufweist.

14. Reinigungsvorrichtung nach einem der vorhergehenden Ansprüche, **dadurch gekennzeichnet, dass** das Abstreifelement (96) eine Öffnung für die Sensorspitze aufweist, deren Umfangsrand messerartig ausgebildet ist, so dass bei einer Relativbewegung von Sensorspitze und Abstreifelement eine mechanische Reinigung der Oberfläche der Sensorspitze erfolgt.

15. Reinigungsvorrichtung nach einem der Ansprüche 2 bis 14, **dadurch gekennzeichnet, dass** die Antriebseinheit (120) eine mobile Antriebseinheit ist, die zumindest eine Pumpe für die Hydraulikflüssigkeit und zumindest eine Pumpe (140) für eine Reinigungsflüssigkeit, jeweils einen Behälter (122, 124) für die beiden Flüssigkeiten und eine Steuerschaltung (132) zur Steuerung der Pumpen aufweist.

16. Verfahren zum in-situ Reinigen von zumindest einer Sensorspitze einer Sensoreinheit in einer Rohrleitung mit einer Reinigungsvorrichtung nach einem der Ansprüche 1 bis 15, **dadurch gekennzeichnet, dass** das Abstreifelement über die Antriebseinheit ein oder mehrmals in Längsrichtung hin- und her bewegt wird, so dass das Abstreifelement an der Sensorspitze entlang gleitet und diese reinigt, wobei für die Bewegung das Volumen der zweiten Kammer (106) vergrößert wird. [vgl § 0049]

17. Verfahren nach Anspruch 16, **dadurch gekennzeichnet, dass** die Sensorspitze vor oder nach der Reinigung mit dem Abstreifelement mit einer Reinigungsflüssigkeit eingesprüht wird.

## Claims

1. Cleaning device for installation in a conduit, comprising
a sensor unit (52) having at least one sensor tip (50);
an elongate housing (34), which has a first longitudinal end and a second longitudinal end (36) and at least partially accommodates the sensor unit (52) such that the sensor tip (50) - in the measuring mode - protrudes at the second longitudinal end (36); and
a wiping unit (40), which is held in the housing (34) so as to be movable in the longitudinal direction, and has a wiping element (96) which is assigned to the sensor tip (50) in such a way that, when the wiping unit (40) moves, the wiping element (96) wipes over the sensor tip, thereby cleaning it;
**characterized in that** the wiping unit (40) has a cylindrical chamber (70) and a piston element (100) provided therein, the piston element (100) being connected to the sensor unit (52) and separating the cylindrical chamber into a first and a second chamber (104, 106).

2. Cleaning device according to claim 1, **characterized by** a drive unit (120) which can be connected to the wiping unit in order to move the wiping unit in the longitudinal direction.

3. Cleaning device according to claim 1 or 2, **characterized in that** the drive unit is a hydraulic drive unit which is intended to pump a hydraulic medium into the first chamber (106) of the cylindrical chamber in order to move the wiping unit in the housing in a longitudinal direction.

4. Cleaning device according to claim 1 or 3, **characterized in that** the wiping unit (96) has a spring (102) which is provided in the second chamber (104) of the cylindrical chamber and engages with the piston element.

5. Cleaning device according to any of claims 1 to 4, **characterized in that** an at least partially flexible hydraulic line (54) extends inside the housing (34), which can be connected at one end to the hydraulic drive unit and at its other end to a hydraulic channel inside the wiping unit, the hydraulic channel opening into the first chamber of the cylindrical chamber.

6. Cleaning device according to any of the preceding claims, **characterized in that** at least one cleaning nozzle (116) is provided which is oriented in the direction of the sensor tip.

7. Cleaning device according to claim 6, **characterized in that** two cleaning nozzles (116) arranged next to each other are provided, the orientations of which are different.

8. Cleaning device according to claim 6 to 7, **characterized in that** a U-shaped carrier element (42) is provided on the wiping unit, which accommodates the at least one cleaning nozzle at its base (44), the base of the carrier element being spaced apart from the wiping element and defining a space (48) therebetween in which the sensor tip - in the measuring mode - is situated.

9. Cleaning device according to any of claims 6 to 8, **characterized in that** an at least partially flexible line (56) for a cleaning fluid extends inside the housing (34), which can be connected to a supply line at its first longitudinal, with the second longitudinal end connected to a channel which extends inside the wiping unit to the at least one cleaning nozzle.

10. Cleaning device according to any of claims 1 to 9, **characterized in that** the wiping element (96) is fitted replaceably to the wiping unit.

11. Cleaning device according to any of the preceding claims, **characterized in that** the wiping element is made of a metal, non-rusting or ceramic material.

12. Cleaning device according to any of the preceding claims, **characterized in that** the wiping element (96) has at least one wiping spring.

13. Cleaning device according to any of the preceding claims, **characterized in that** the sensor unit (52) has a sensor for measuring the flow of gaseous media.

14. Cleaning device according to any of the preceding claims, **characterized in that** the wiping element (96) has an opening for the sensor tip, the peripheral edge of which is designed as a blade, such that a relative movement of the sensor tip and the wiping element results in mechanical cleaning of the surface of the sensor tip.

15. Cleaning device according to any of claims 2 to 14, **characterized in that** the drive unit (120) is a mobile drive unit which has at least one pump for the hydraulic fluid and at least one pump (140) for a cleaning fluid, a container (122, 124) for each of the two fluids and a control circuit (132) for controlling the pumps.

16. Method for in-situ cleaning of at least one sensor tip of a sensor unit in a conduit, having a cleaning device according to any of claims 1 to 15, **characterized in that** the wiping element is moved back and forth in the longitudinal direction once or multiple times via the drive unit, such that the wiping element slides over the sensor tip and cleans it, the volume of the second chamber (106) being increased for the movement, [cf. paragraph 0049]

17. Method according to claim 16, **characterized in that** the sensor tip is sprayed with a cleaning fluid before or after cleaning with the wiping element.

## Revendications

1. Dispositif de nettoyage destiné à être monté dans une canalisation, comportant
une unité à capteur (52) présentant au moins une pointe de capteur (50) ;
un boîtier (34) allongé présentant une première extrémité longitudinale et une seconde extrémité longitudinale (36) et recevant au moins partiellement l'unité à capteur (52), de sorte que la pointe de capteur (50), dans le mode de mesure, fait saillie au niveau de la seconde extrémité longitudinale (36) ; et
une unité de raclage (40) maintenue dans le boîtier (34) de manière à pouvoir se déplacer dans la direction longitudinale et qui présente un élément de raclage (96) associé à la pointe de capteur (50) de telle sorte que, lors d'un déplacement de l'unité de raclage (40), l'élément de raclage (96) racle la pointe de capteur et la nettoie ainsi ;
**caractérisé en ce que** l'unité de raclage (40) présente un espace cylindrique (70) et un élément formant piston (100) prévu dans celui-ci, dans lequel l'élément formant piston (100) est relié à l'unité à capteur (52) et sépare l'espace cylindrique en une première et en une seconde chambre (104, 106).

2. Dispositif de nettoyage selon la revendication 1, **caractérisé par** une unité d'entraînement (120) qui peut être reliée à l'unité de raclage afin de déplacer l'unité de raclage dans la direction longitudinale.

3. Dispositif de nettoyage selon la revendication 1 ou 2,
**caractérisé en ce que** l'unité d'entraînement est une unité d'entraînement hydraulique prévue pour pomper un milieu hydraulique dans la première chambre (106) de l'espace cylindrique afin de déplacer l'unité de raclage dans le boîtier dans une direction longitudinale.

4. Dispositif de nettoyage selon la revendication 1 ou 3,
**caractérisé en ce que** l'unité de raclage (96) présente un élément élastique (102) qui est prévu dans la seconde chambre (104) de l'espace cylindrique et qui coopère avec l'élément formant piston.

5. Dispositif de nettoyage selon l'une des revendications 1 à 4, **caractérisé en ce qu'**une conduite hydraulique (54) flexible au moins dans certaines sections s'étend à l'intérieur du boîtier (34), laquelle peut être raccordée à l'unité d'entraînement hydraulique au niveau d'une de ses extrémités et est raccordée, au niveau de son autre extrémité, à un canal hydraulique à l'intérieur de l'unité de raclage, dans lequel le canal hydraulique débouche dans la première chambre de l'espace cylindrique.

6. Dispositif de nettoyage selon l'une des revendications précédentes, **caractérisé en ce qu'**au moins une buse de nettoyage (116) est prévue, laquelle est orientée en direction de la pointe de capteur.

7. Dispositif de nettoyage selon la revendication 6, **caractérisé en ce que** deux buses de nettoyage (116) disposées l'une à côté de l'autre et dont les orientations sont différentes sont prévues.

8. Dispositif de nettoyage selon les revendications 6 à 7,
**caractérisé en ce qu'**un élément de support en forme de U (42) est prévu sur l'unité de raclage, lequel élément de support reçoit au niveau de sa base (44) l'au moins une buse de nettoyage, dans lequel la base de l'élément de support est espacée de l'élément de raclage et définit entre eux un espace (48) dans lequel se trouve, dans le mode de mesure, la pointe de capteur.

9. Dispositif de nettoyage selon l'une des revendications 6 à 8,
**caractérisé en ce qu'**une conduite (56) flexible au moins dans certaines sections pour un liquide de nettoyage s'étend à l'intérieur du boîtier (34), laquelle conduite peut être raccordée à une conduite d'alimentation au niveau de sa première extrémité longitudinale et dont la seconde extrémité longitudinale est raccordée à un canal qui s'étend à l'intérieur de l'unité de raclage jusqu'à l'au moins une buse de nettoyage.

10. Dispositif de nettoyage selon l'une des revendications 1 à 9,
**caractérisé en ce que** l'élément de raclage (96) est monté de manière à pouvoir être remplacé sur l'unité de raclage.

11. Dispositif de nettoyage selon l'une des revendications précédentes, **caractérisé en ce que** l'élément de raclage est constitué d'un matériau métallique, inoxydable ou céramique.

12. Dispositif de nettoyage selon l'une des revendications précédentes, **caractérisé en ce que** l'élément de raclage (96) présente au moins un élément élastique de raclage.

13. Dispositif de nettoyage selon l'une des revendications précédentes, **caractérisé en ce que** l'unité à capteur (52) présente un capteur pour la mesure de débit de milieux gazeux.

14. Dispositif de nettoyage selon l'une des revendications précédentes, **caractérisé en ce que** l'élément de raclage (96) présente une ouverture pour la pointe de capteur, dont le bord circonférentiel est réalisé en forme de couteau, de sorte que, lors d'un déplacement relatif de la pointe de capteur et de l'élément de raclage, un nettoyage mécanique de la surface de la pointe de capteur est effectué.

15. Dispositif de nettoyage selon l'une des revendications 2 à 14, **caractérisé en ce que** l'unité d'entraînement (120) est une unité d'entraînement mobile présentant au moins une pompe pour le liquide hydraulique et au moins une pompe (140) pour un liquide de nettoyage, respectivement un récipient (122, 124) pour les deux liquides et un circuit de commande (132) permettant de commander les pompes.

16. Procédé permettant le nettoyage *in situ* d'au moins une pointe de capteur d'une unité à capteur dans une canalisation comportant un dispositif de nettoyage selon l'une des revendications 1 à 15, **caractérisé en ce que** l'élément de raclage est déplacé en va-et-vient une ou plusieurs fois dans la direction longitudinale par l'intermédiaire de l'unité d'entraînement, de sorte que l'élément de raclage glisse le long de la pointe de capteur et la nettoie, dans lequel le volume de la seconde chambre (106) est augmenté pour le déplacement. [cf. § 0049]

17. Procédé selon la revendication 16, **caractérisé en ce que** la pointe de capteur est aspergée d'un liquide de nettoyage avant ou après le nettoyage avec l'élément de raclage.
